(19)

**Europäisches Patentamt**

**European Patent Office**

**Office européen des brevets**

(11) **EP 2 175 243 B1**

(12) **FASCICULE DE BREVET EUROPEEN**

(45) Date de publication et mention de la délivrance du brevet:
**12.08.2015 Bulletin 2015/33**

(51) Int Cl.:
***G01D 5/347*** *(2006.01)*

(21) Numéro de dépôt: **08305662.2**

(22) Date de dépôt: **09.10.2008**

(54) **Codeur de position à haute résolution**

Hochauflösender Positionscodierer

High resolution position encoder

(84) Etats contractants désignés:
**AT BE BG CH CY CZ DE DK EE ES FI FR GB GR HR HU IE IS IT LI LT LU LV MC MT NL NO PL PT RO SE SI SK TR**

(43) Date de publication de la demande:
**14.04.2010 Bulletin 2010/15**

(73) Titulaire: **Delphi Technologies, Inc.**
**Troy, MI 48007 (US)**

(72) Inventeurs:
• **Ndao, Mandiaye**
**67000 Strasbourg (FR)**

• **Tupinier, Laurent**
**67116 Reichstett (FR)**

(74) Mandataire: **Delphi France SAS**
**Patent Department**
**22, avenue des Nations**
**CS 65059 Villepinte**
**95972 Roissy CDG Cedex (FR)**

(56) Documents cités:
**EP-A1- 1 862 775     WO-A-00/06973**
**US-A- 5 260 568     US-A1- 2002 195 551**
**US-B2- 6 742 275     US-B2- 6 888 126**

**Description**

La présente invention concerne un système optique pour la mesure de la position d'un corps en mouvement, permettant de mettre en oeuvre des mesures à haute résolution dans différentes applications.

Le problème que se propose à titre principal de résoudre l'invention est par conséquent le codage à une résolution élevée de la position d'un corps en mouvement, dans le cadre d'un système optique doté d'au moins une source de lumière émettant un faisceau de lumière laser destiné à interférer avec un codeur optique diffractif solidaire dudit corps en mouvement, au moins un dispositif de détection à cellules contiguës étant prévu pour la détection du signal lumineux obtenu après interférence avec ledit corps.

Plus précisément encore, le codeur comporte une succession de cellules de codage munies d'hologrammes diffractifs correspondant à des codes définissant chacun un emplacement unique sur le codeur, et donc sur le corps en mouvement. Ces cellules interfèrent successivement avec le faisceau de lumière au cours de leur déplacement relatif, et le signal diffracté obtenu, prenant la forme d'un code optique numérique formé de taches lumineuses discrètes, est envoyé vers le dispositif de détection pour la mesure de la position absolue du corps en mouvement. La directivité du faisceau de lumière, ainsi que son calibrage, sont par ailleurs contrôlés par des moyens de type diaphragme à fente.

Le codage de la position d'un corps en mouvement en utilisant des technologies basée sur l'ombroscopie est divulgué notamment dans les documents US2002/195551A1, WO00/06973A, et US6742275B2, qui mettent en oeuvre des codes barres éclairés par une source lumineuse. La technologie de l'ombroscopie est basée sur l'utilisation de zones qui - par transmission ou par réflexion - permettent le « passage » ou la « rétention » de l'onde lumineuse incidente pour l'obtention d'un code numérique qui est en quelque sorte le « négatif » desdites zones. Les techniques de codage divulguées dans ces documents nécessitent, pour obtenir une précision accrue, d'effectuer un traitement en aval du composant de codage produisant le code de position absolu.

L'utilisation d'hologrammes diffractifs, en réalité des hologrammes générés par ordinateur, pour le codage absolu de la position d'un organe en mouvement par rapport à un autre, est connue. Une telle configuration est par exemple appliquée à des capteurs angulaires, permettant par conséquent la mesure de la position angulaire d'un élément rotatif par rapport à un système fixe. L'avantage de l'utilisation des hologrammes diffractifs générés par ordinateur est que le signal diffracté généré permet l'obtention, sur le photodétecteur, d'un code optique numérique, c'est-à-dire composé de taches allumées (bit 1) et de taches éteintes (bit 0) immédiatement exploitables en sortie du photodétecteur en tant que code numérique électronique qui peut être directement traité par un microcontrôleur. Par ailleurs, les hologrammes diffractifs offrent une grande stabilité du signal sur l'ensemble de la surface de la cellule de codage, ce qui permet de simplifier l'intégration mécanique du codeur dans la configuration dans laquelle il doit être monté. Le document EP 1 862 775 A1 divulgue un codeur comportant une succession de cellules de codage primaires munies d'hologrammes diffractifs pour la mesure de position absolue et une série de cellules de codage secondaires munies d'hologrammes diffractifs permettant de produire une tache lumineuse détectable par un photodétecteur de position.

Toutefois, à l'heure actuelle, il n'est possible de réaliser des cellules de codage à hologrammes diffractifs que d'une taille minimale donnée, de l'ordre de 15 microns, ce qui ne permet pas d'atteindre des résolutions suffisamment élevées pour certaines applications. La technologie de fabrication des hologrammes générés par ordinateur, bien qu'offrant des avantages décisifs pour les applications envisagées, présente donc des limites dimensionnelles qui interdisent par exemple de coder de manière absolue plusieurs rotations d'une colonne de direction de véhicule sur un seul tour d'un capteur rotatif présentant un encombrement raisonnable. On entend par là un capteur dont le disque supportant le codeur est d'un diamètre réduit, compatible avec le peu d'espace disponible en haut des colonnes de direction.

Le système de l'invention remédie à cet inconvénient, en proposant une solution qui permet d'accroître dans des proportions importantes la résolution et la précision, d'une manière au surplus simple et économiquement peu onéreuse à la fabrication.

A cet effet, ledit système, comportant classiquement :

- une source de lumière émettant un faisceau de lumière laser ;
- des moyens de calibrage et de contrôle de la directivité du faisceau du type diaphragme à fente ;
- un codeur optique diffractif solidaire du corps en mouvement, comportant des cellules de codage dotées d'au moins un motif diffractif et positionnées en vue d'interférer successivement avec le faisceau calibré, chaque cellule générant un code optique numérique sous forme de taches lumineuses discrètes ; et
- un premier dispositif de détection du code optique numérique, constitué d'au moins une rangée de cellules de détection ;

se caractérise à titre principal en ce que chaque cellule de codage génère un second signal permettant un codage analogique, le signal conduisant au codage analogique étant détecté sur un second dispositif de détection et le codage analogique consistant en la génération d'une tache mobile se déplaçant dans la direction de l'orientation du second dispositif de détection, lequel est un détecteur de position.

La solution au problème de la résolution, selon l'invention, consiste par conséquent à multiplexer deux signaux dans la même piste du codeur constituée d'une succession d'hologrammes générés par ordinateur, l'idée étant d'utiliser un signal analogique simple pour préciser la lecture numérique afin d'aller au-delà des limites physiques de fabrication desdits hologrammes, conduisant à un seuil de résolution parfois insuffisant.

En d'autres termes, on transfère la charge de l'augmentation de la précision de la mesure du codeur vers les moyens de traitement électronique, sachant cependant qu'un signal analogique simple ne nécessite pas de traitement complexe.

La mesure de la position de la tache mobile fournit une information intermédiaire sur le positionnement exact du corps en mouvement par rapport au faisceau de lumière, et par conséquent au référentiel fixe, élevant sensiblement la sensibilité du système, c'est-à-dire sa résolution.

Le traitement « fin » n'est plus effectué sur la base d'un signal numérique, comme pour le reste du code, mais d'un signal analogique qui nécessite un traitement additionnel, en l'occurrence cependant bien maîtrisé. Ce traitement consiste à détecter la position de la tache lumineuse, constituant le signal analogique, sur le détecteur de position. Celui-ci peut par exemple être un détecteur de position barycentrique.

Dans cette hypothèse, le détecteur fournit deux courants d'intensités distinctes qui varient selon la position de la tache par rapport au détecteur, laquelle fait par conséquent varier la ou les cellules de détection illuminées par la tache en mouvement, dont l'emplacement peut être immédiatement et en permanence calculé en utilisant une formule de type barycentrique.

Selon la ou les cellules de détection éclairée(s) par la tache, on peut facilement calculer la position de cette dernière, c'est-à-dire la position relative précise du faisceau par rapport à chaque cellule de codage, et finalement la position des parties fixes du système relativement au(x) élément(s) mobile(s) ou l'inverse.

Selon une configuration possible, le détecteur de position comporte des cellules de détection discrètes disposées selon le trajet de la tache lumineuse.

Dans cette hypothèse, selon la position du faisceau par rapport au codeur, seules certaines des cellules de détection sont activées, et permettent de calculer la position dudit faisceau dans la cellule de codage du codeur.

De préférence, la tache mobile se déplace selon un trajet rectiligne. Dans ce cas, le détecteur de position est également rectiligne et peut par exemple être positionné dans le prolongement de la ou des rangées de cellules dévolue(s) à la détection du code optique numérique initialement généré par chaque cellule de codage.

De préférence, un même codage analogique est réalisé périodiquement par groupes de n cellules de codage contiguës sur le codeur, le dispositif de détection de position comportant, dans la direction de déplacement de la tache mobile, m cellules de détection affectées à chacune des n cellules de codage.

Le codage analogique de chaque cellule de codage génère une tache mobile selon un déplacement mesuré par les m cellules de détection, puis les m cellules de détection suivantes prennent le relais pour la cellule de codage suivante, et ainsi de suite jusqu'à la cellule de codage n. Ensuite, le codage analogique est réitéré de la même manière dans les n cellules de codage suivantes. Pour un codeur rotatif, cela signifie notamment que le codage analogique obéit à une certaine périodicité angulaire.

Ladite périodicité dépend en fait de la longueur du dispositif de décodage secondaire, et donc des dimensions des n x m cellules de détection.

Le système de l'invention peut par exemple être utilisé comme capteur angulaire, le corps en mouvement étant alors rotatif. Le codeur optique diffractif peut alors consister en un disque solidarisé à un arbre tournant, les cellules de codage étant disposées sur une piste annulaire dudit disque.

Une application possible peut être une colonne de direction de véhicule automobile munie d'un capteur d'angle, le disque pouvant alors être fixé à la colonne ou en liaison rotative à proximité de celle-ci.

Le concept de l'invention peut être étendu et, en particulier dans une configuration rotative telle qu'envisagée ci-dessus, utiliser un second codeur fonctionnant avec la fraction de lumière non diffractée par le premier codeur (d'ordre 0).

Plus précisément, le système peut alors par exemple comporter un second disque, plus distant de la source de lumière et disposé au moins partiellement sur le trajet du signal lumineux en sortie du premier disque de sorte que la lumière non diffractée par le premier disque rencontre une piste du second disque générant un codage analogique sur le même dispositif de détection, les deux disques étant reliés par une portion d'arbre constituée d'une barre de torsion.

Du fait du positionnement de la barre de torsion entre les disques, tout couple appliqué à la colonne de direction génère une torsion au niveau de ladite barre, et par conséquent un décalage angulaire entre les disques qui se répercute dans la position des taches lumineuses, dans l'hypothèse d'un codage analogique effectué par chaque disque sous forme d'une tache lumineuse mobile. La mesure de la distance entre les taches issues des deux codeurs permet la mesure de l'angle différentiel existant entre les disques de codage, c'est-à-dire la mesure de la torsion intervenue entre les disques.

La connaissance de cet angle permet ensuite de déduire la valeur du couple, qui est directement proportionnel à l'angle différentiel. La position initiale des disques et le positionnement des taches qui en résulte en l'absence de torsion doivent bien entendu être connus de sorte que la mesure du décalage additionnel éventuellement dû à une torsion puisse être possible.

Plus précisément, pour simplifier la mesure, le codage analogique peut être de même périodicité et de même forme que le codage analogique issu du premier disque. Ainsi, les deux disques peuvent par exemple être conçus et positionnés de sorte que les deux taches mobiles qui en sont issues sont distantes d'une valeur constante I ≥ 0 en l'absence de torsion, la mesure d'un écart égal à I + ∆I en cours de fonctionnement permettant d'en déduire le couple appliqué, qui est en l'occurrence proportionnel à ∆I.

Une configuration rotative n'est bien entendu pas la seule qui peut être mise en oeuvre avec un système selon l'invention. En particulier, le codage d'un déplacement relatif en translation, par exemple si le corps en mouvement prend la forme d'une réglette sur laquelle est disposée une bande comportant des cellules de codage axial, est parfaitement envisageable.

L'invention concerne également un procédé de codage à haute résolution du déplacement d'un corps en mouvement au moyen d'un système optique tel que décrit auparavant, incluant un codage analogique à tache mobile, qui se caractérise à titre essentiel par les étapes suivantes :

- lecture du code optique numérique identifiant la cellule de codage sur le corps en mouvement et donnant la mesure absolue de la position du corps en mouvement ;
- détection simultanée de la position d'une tache lumineuse constituant le signal analogique généré par les cellules de codage et calcul de la position incrémentale du corps entre deux positions en mesure absolue.

Comme déjà mentionné, dans le cadre du procédé, le calcul de la position incrémentale s'effectue de préférence selon une méthode barycentrique.

Dans l'hypothèse où le système permet une double mesure au moyen de deux disques de codage, aboutissant à une détermination du couple, le procédé de l'invention se caractérise plus précisément par les étapes suivantes :

- lecture du code optique numérique identifiant la cellule de codage sur le corps en mouvement et donnant la mesure absolue de la position angulaire du corps en mouvement ;
- détection simultanée de la position des deux taches lumineuses constituant les signaux analogiques générés respectivement dans les cellules de détection du premier disque et dans la piste du second disque ;
- mesure de l'angle différentiel des disques de codage par mesure de la distance entre les taches lumineuses résultant du codage analogique ; et
- calcul du couple de l'arbre de torsion auquel sont solidarisés les disques de codage, proportionnel à la mesure de l'angle différentiel.

Un unique système optique permet donc, selon l'invention, d'obtenir simplement une double mesure d'un déplacement angulaire d'une part, et d'un couple d'autre part.

L'invention va à présent être décrite plus en détail, en référence aux figures annexées, pour lesquelles :

- la figure 1 est une vue schématique d'un système optique selon la présente invention ;
- la figure 2 montre l'effet sur un détecteur de position du signal analogique résultant d'un faisceau envoyé sur des cellules de codage;
- la figure 3 représente les courbes de détection ; et
- la figure 4 montre une représentation schématique d'un système optique selon l'invention à deux disques de codage permettant une double mesure de l'angle et du couple.

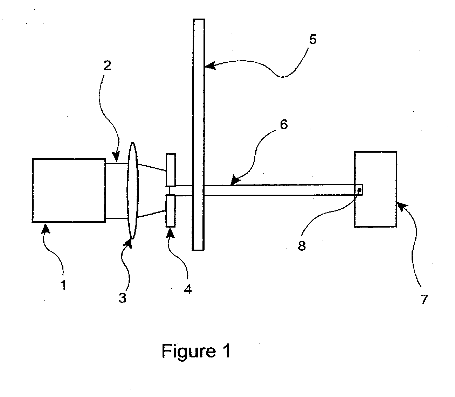

En référence à la figure 1, la source de lumière (1), en l'espèce une diode laser, émet un faisceau lumineux (2) de lumière à destination par exemple d'une lentille de projection (3) en sortie de laquelle le faisceau (2) est concentré vers un diaphragme (4) dans lequel est pratiquée une fente qui limite la section active du faisceau (2). Ce dernier, ainsi formaté par le diaphragme (4), est envoyé à destination d'un codeur (5) solidaire d'un élément en rotation (non représenté) dont on veut connaître la position angulaire.

Le codeur (5) comporte des cellules de codage contenant des hologrammes diffractifs, en sortie desquelles un signal lumineux (6) diffracté comportant des taches lumineuses formant notamment un code optique numérique est envoyé à destination d'un premier dispositif de détection (7) doté d'au moins une rangée (8) de cellules de détection.

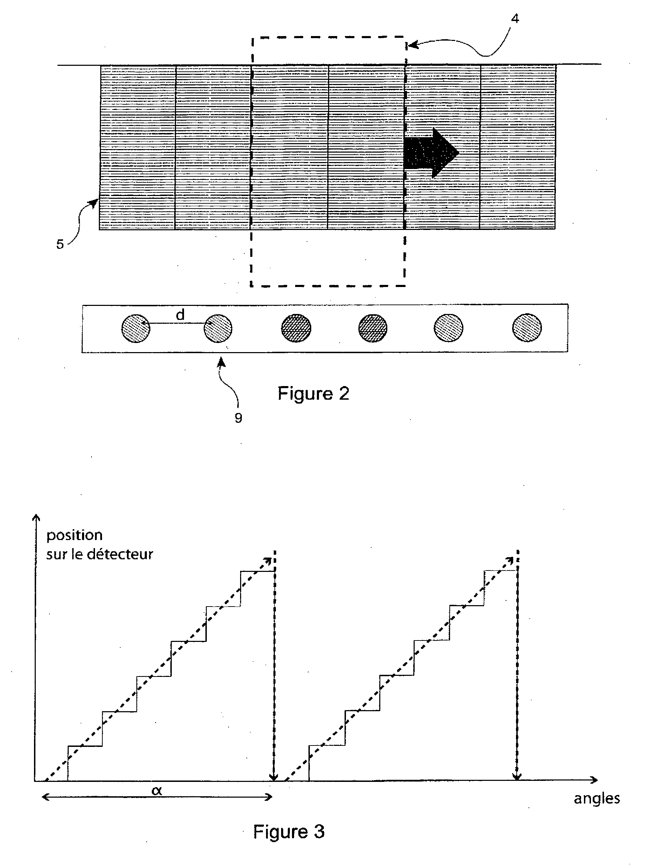

Selon l'invention, le faisceau de lumière (2) calibré par le diaphragme (4) génère de plus, après interaction avec le codeur (5), un signal analogique sous forme d'une tache lumineuse mobile sur un second détecteur (9) constitué de N (en l'espèce, N = 6 à des fins illustratives) cellules de détection, comme cela apparaît en figure 2. Lorsque le faisceau balaye la totalité d'une cellule de codage du fait du mouvement du codeur (5), la tache lumineuse analogique se déplace d'une distance d, par exemple 200 µm sur le détecteur de position (9), distance correspond sur la figure, pour simplifier, à celle qui sépare deux cellules de détection discrètes adjacentes.

Dans la figure 2, compte tenu de la position du faisceau, délimité par la fente du diaphragme (4), deux cellules de détection sont activées (les plus sombres).

Si ce détecteur (9) est de type barycentrique, il fournit deux courants de sortie I1 et I2, et la position p de la tache est calculée par exemple en utilisant une formule du type :

$$p = K(I1/(I1+I2))$$

où K indique l'amplitude maximale mesurable.

La longueur limitée du dispositif de détection (9) entraîne la nécessité d'une réinitialisation périodique du codage analogique, comme cela est par exemple représenté en figure 3. Lorsqu'un secteur de longueur donnée de la piste de codage est parcouru, constituant la périodicité spatiale du signal analogique et correspondant à un groupe de n cellules de codage, celui-ci est répété sur un secteur suivant de même longueur. Dans l'hypothèse d'un capteur d'angle, tel que représenté en figure 3, le signal analogique est réinitialisé dès qu'un secteur angulaire couvrant un angle α est parcouru. C'est ce qui apparaît en figure 3.

Ainsi, la courbe en trait plein montre, en ordonnées, la position de la tache lumineuse sur le détecteur de position (9) en fonction de la position angulaire, avec la réinitialisation périodique. En traits pointillés, on a représenté le signal indiquant la position barycentrique de la tache constituant le signal analogique, restituant le déplacement linéaire de la tache mobile constituant le signal analogique.

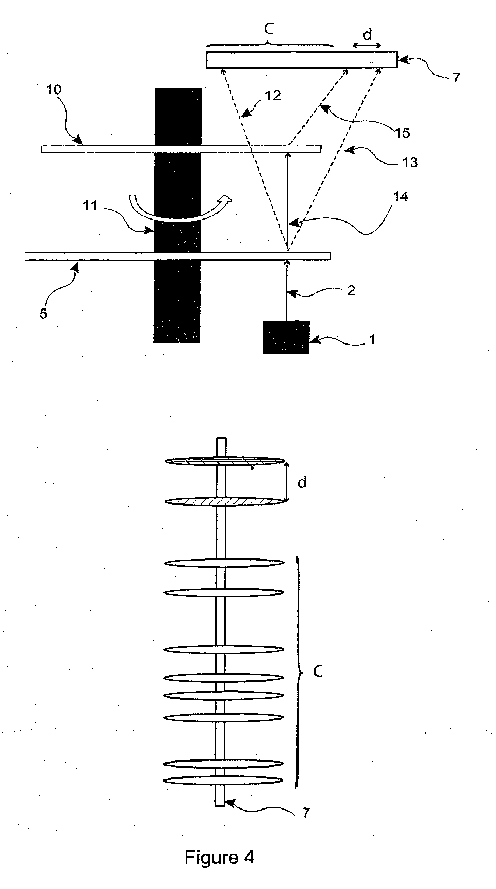

La figure 4 montre très schématiquement la constitution d'un système à deux codeurs, un second disque de codage (10) étant ajouté au premier (5). Ces codeurs (5, 10), par exemple montés sur une colonne de direction, sont séparés par portion constituée d'une barre de torsion (11) qui répercute le couple auquel la colonne de direction est soumise sous forme d'une torsion dont l'angle est mesurable par les disques de codage.

Ainsi, le premier disque de codage (5) assure exactement la même fonction que décrite auparavant, envoyant sur le dispositif de détection un signal (12) constituant un code optique numérique (c) et un signal analogique (13) sous forme d'une tache mobile. Le second disque (10) n'interagit pas avec ces signaux. En revanche, la fraction de lumière (14) non diffractée (d'ordre 0) par le disque (5) interfère avec une piste annulaire du second disque (10), créant un signal analogique (15) également sous forme d'une tache lumineuse mobile, cependant décalée d'une distance (d) par rapport à la tache obtenue via le premier disque (5) lorsqu'il y a torsion, c'est-à-dire en présence d'un couple s'exerçant sur la colonne de direction.

La mesure de cette distance (d) permet dans un premier temps un calcul de l'angle différentiel résultant de la torsion de la barre (11), et dans un second temps la détermination du couple appliqué à la colonne de direction, qui est proportionnel à cet angle.

Les exemples de configuration apparaissant dans les figures ne sont indiqués qu'à titre informatif, et ne limitent pas la portée du présent droit, l'invention englobant les variantes structurelles à la portée de l'homme de l'art.

**Revendications**

1. Système optique pour la mesure de la position d'un corps en mouvement, comportant :

   - une source de lumière (1) émettant un faisceau de lumière laser (2) ;
   - des moyens de calibrage et de contrôle de la directivité du faisceau du type diaphragme (4) à fente ;
   - un codeur (5) optique diffractif solidaire du corps en mouvement, comportant des cellules de codage dotées d'au moins un motif diffractif et positionnées en vue d'interférer successivement avec le faisceau (2) calibré, chaque cellule générant un code optique numérique (c) sous forme de taches lumineuses discrètes ;
   - un premier dispositif de détection (7) du code optique numérique (c), constitué d'au moins une rangée (8) de cellules de détection ;

   **caractérisé en ce que** chaque cellule de codage génère un second signal permettant un codage analogique, **en ce que** le signal conduisant au codage analogique est détecté sur un second dispositif de détection (9), et **en ce que** le codage analogique consiste en la génération d'une tache mobile se déplaçant dans la direction de l'orientation du second dispositif de détection (9), lequel est un détecteur de position.

2. Système optique selon la revendication précédente, **caractérisé en ce que** le second dispositif de détection (9) est un détecteur de position barycentrique.

3. Système optique selon l'une quelconque des revendications précédentes, **caractérisé en ce que** le détecteur (9) de position comporte des cellules de détection discrètes disposées selon le trajet de la tache lumineuse.

4. Système optique selon l'une quelconque des revendications précédentes, **caractérisé en ce que** la tache mobile se déplace dans un sens selon un trajet rectiligne.

5. Système optique selon l'une quelconque des revendications précédentes, **caractérisé en ce qu'**un même codage analogique est réalisé périodiquement par groupes de n cellules de codage contigües sur le codeur (5), le dispositif de détection (9) comportant, dans la direction de déplacement de la tache mobile, m cellules de détection affectées à chacune des n cellules de codage.

6. Système optique selon l'une quelconque des revendications précédentes, **caractérisé en ce qu'**il est utilisé comme capteur angulaire, le corps en mouvement étant rotatif.

7. Système optique selon la revendication précédente, **caractérisé en ce que** le codeur (5) optique diffractif consiste en un disque solidarisé à un arbre tournant, les cellules de codage étant disposées sur une piste annulaire du disque.

8. Système optique selon la revendication précédente, **caractérisé en ce qu'**il comporte un second disque (10), plus distant de la source de lumière (1) et disposé au moins partiellement sur le trajet du signal lumineux en sortie du premier disque (5) de sorte que la lumière (14) non diffractée par ledit premier disque (5) rencontre une piste générant un codage analogique sur le même dispositif de détection, les deux disques (5, 10) étant reliés par une portion d'arbre constituée d'une barre de torsion (11).

9. Système optique selon la revendication précédente, **caractérisé en ce que** le codage analogique est de même périodicité et de même forme que le codage analogique issu du premier disque (5).

10. Procédé de codage à haute résolution du déplacement d'un corps en mouvement au moyen d'un système optique selon l'une quelconque des revendications précédentes, **caractérisé par** les étapes suivantes :

 - lecture du code optique numérique identifiant la cellule de codage sur le corps en mouvement et donnant la mesure absolue de la position du corps en mouvement ;
 - détection simultanée de la position d'une tache lumineuse constituant le signal analogique généré par les cellules de détection et calcul de la position incrémentale du corps entre deux positions en mesure absolue.

11. Procédé de codage à haute résolution du déplacement angulaire d'un corps en rotation selon la revendication 10, **caractérisé en ce que** le calcul de la position incrémentale s'effectue selon une méthode barycentrique

12. Procédé de codage à haute résolution du déplacement angulaire d'un corps en rotation selon l'une des revendications 10 à 11, au moyen d'un système optique selon les revendications 8 et 9, **caractérisé par** les étapes suivantes :

 - lecture du code optique numérique identifiant la cellule de codage sur le corps en mouvement et donnant la mesure absolue de la position angulaire du corps en mouvement ;
 - détection simultanée de la position des deux taches lumineuses constituant les signaux analogiques générés respectivement dans les cellules de détection du premier disque (5) et dans la piste du second disque (10) ;
 - mesure de l'angle différentiel des disques (5, 10) de codage par mesure de la distance (d) entre les taches lumineuses résultant du codage analogique ; et
 - calcul du couple de l'arbre de torsion (11) auquel sont solidarisés les disques de codage (5, 10), proportionnel à la mesure de l'angle différentiel.

**Patentansprüche**

1. Optisches System zum Messen der Position eines Körpers in Bewegung, enthaltend:

 - eine Lichtquelle (1), die einen Laserlichtstrahl (2) ausgibt;
 - Einrichtungen vom Typ Schlitzblende (4) zum Kalibrieren und Steuern der Richtcharakteristik des Lichtstrahls;
 - eine diffraktive, optische Codiervorrichtung (5), die fest mit dem Körper in Bewegung verbunden ist und Codierzellen aufweist, die mit zumindest einem diffraktiven Muster versehen und dazu vorgesehen sind, nacheinander mit dem kalibrierten Lichtstrahl (2) zu interferieren, wobei jede Zelle einen digitalen optischen Code (c) in Form von diskreten Lichtflecken erzeugt;
 - eine erste Detektionsvorrichtung (7) zum Detektieren des digitalen optischen Codes (c), der aus zumindest einer Reihe (8) von Detektionszellen besteht;

 **dadurch gekennzeichnet, dass** jede Codierzelle ein zweites Signal erzeugt, das eine analoge Codierung gestattet, dass das zur analogen Codierung führende Signal an einer zweiten Detektionsvorrichtung (9) detektiert wird und dass die analoge Codierung aus der Erzeugung eines beweglichen Flecks besteht, der sich in der Richtung der Ausrichtung der zweiten Detektionsvorrichtung (9) verlagert, die ein Positionsdetektor ist.

2. Optisches System nach dem vorangehenden Anspruch, **dadurch gekennzeichnet, dass** die zweite Detektionsvorrichtung (9) ein baryzentrischer Positionsdetektor ist.

3. Optisches System nach einem der vorangehenden Ansprüche, **dadurch gekennzeichnet, dass** der Positionsdetektor (9) diskrete Detektionszellen aufweist, die entlang des Lichtwegs des Lichtflecks angeordnet sind.

4. Optisches System nach einem der vorangehenden Ansprüche, **dadurch gekennzeichnet, dass** der bewegliche Fleck sich in einer Richtung entlang eines geradlinigen Lichtwegs verlagert.

**5.** Optisches System nach einem der vorangehenden Ansprüche, **dadurch gekennzeichnet, dass** eine gleiche analoge Codierung periodisch gruppenweise mit n zusammenhängenden Codierzellen an der Codiervorrichtung (5) durchgeführt wird, wobei die Detektionsvorrichtung (9) in Verlagerungsrichtung des beweglichen Lichtflecks m Detektionszellen aufweist, die jeder der n Codierzellen zugeordnet sind.

**6.** Optisches System nach einem der vorangehenden Ansprüche, **dadurch gekennzeichnet, dass** es als Winkelsensor verwendet wird, wobei der Körper in Bewegung drehbar ist.

**7.** Optisches System nach dem vorangehenden Anspruch, **dadurch gekennzeichnet, dass** die diffraktive, optische Codiervorrichtung (5) aus einer Scheibe besteht, die fest mit einer Drehwelle verbunden ist, wobei die Codierzellen auf einer ringförmigen Spur der Scheibe angeordnet sind.

**8.** Optisches System nach dem vorangehenden Anspruch, **dadurch gekennzeichnet, dass** es eine zweite Scheibe (10) enthält, die von der Lichtquelle (1) weiter entfernt liegt und zumindest teilweise auf dem Lichtweg des Lichtsignals am Ausgang der ersten Scheibe (5) so angeordnet ist, dass das nicht von der ersten Scheibe (5) gebeugte Licht (14) auf eine Spur trifft, die eine analoge Codierung an der gleichen Detektionsvorrichtung erzeugt, wobei die beiden Scheiben (5, 10) über einen Wellenabschnitt verbunden sind, der aus einem Torsionsstab (11) besteht.

**9.** Optisches System nach dem vorangehenden Anspruch, **dadurch gekennzeichnet, dass** die analoge Codierung die gleiche Periodizität und die gleiche Form wie die von der ersten Scheibe (5) stammende analoge Codierung hat.

**10.** Verfahren zur hochauflösenden Codierung der Verlagerung eines Körpers in Bewegung mittels eines optischen Systems nach einem der vorangehenden Ansprüche, **gekennzeichnet durch** die nachfolgenden Schritte:

- Einlesen des digitalen, optischen Codes, der die Codierzelle an dem Körper in Bewegung identifiziert und die absolute Messung der Position des Körpers in Bewegung angibt;
- gleichzeitige Detektion der Position eines Lichtflecks, der das von den Detektionszellen erzeugte analoge Signal darstellt, und Berechnung der inkrementalen Position des Körpers zwischen zwei Positionen bei absoluter Messung.

**11.** Verfahren zur hochauflösenden Codierung der Winkelverlagerung eines Körpers in Drehung nach Anspruch 10, **dadurch gekennzeichnet, dass** die Berechnung der inkrementalen Position mit einem baryzentrischen Verfahren erfolgt.

**12.** Verfahren zur hochauflösenden Codierung der Winkelverlagerung eines Körpers in Drehung nach einem der Ansprüche 10 bis 11 mittels eines optischen Systems nach den Ansprüchen 8 und 9, **gekennzeichnet durch** die nachfolgenden Schritte:

- Einlesen des digitalen, optischen Codes, der die Codierzelle an dem Körper in Bewegung identifiziert und die absolute Messung der Winkelposition des Körpers in Bewegung angibt;
- gleichzeitige Detektion der Position der beiden Lichtflecken, die die analogen Signale darstellen, die jeweils in den Detektionszellen der ersten Scheibe (5) bzw. in der Spur der zweiten Scheibe (10) erzeugt werden;
- Messen des Differenzwinkels der Codierscheiben (5, 10) durch Messen der Entfernung (d) zwischen den Lichtflecken, die sich aus der analogen Codierung ergibt; und
- Berechnen des Moments der Torsionswelle (11), an dem die Codierscheiben (5, 10) fest verbunden sind, und zwar proportional zur Messung des Differenzwinkels.

**Claims**

**1.** Optical system for the measurement of the position of a body in motion, comprising:

- a light source (1) emitting a laser light beam (2) ;
- means of calibration and checking of the directivity of the beam of the slit diaphragm type (4);
- a diffractive optical encoder (5) fastened to the body in motion, comprising encoding cells endowed with at least one diffractive pattern and positioned with a view to interfering successively with the calibrated beam (2), each cell generating a digital optical code (c) in the form of discrete luminous spots;
- a first detection device (7) for detecting the digital optical code (c), consisting of at least one row (8) of detection cells;

**characterized in that** each encoding cell generates a second signal allowing an analogue encoding, and **in that** the signal leading to the analogue encoding is detected on a second detection device (9), and **in that** the analogue encoding consists of the generation of a mobile spot moving in the direction of the orientation of the second detection device (9), which is a position detector.

2. Optical system according to the preceding claim, **characterized in that** the second detection device (9) is a barycentric position detector.

3. Optical system according to any one of the preceding claims, **characterized in that** the position detector (9) comprises discrete detection cells disposed along the path of the luminous spot.

4. Optical system according to any one of the preceding claims, **characterized in that** the mobile spot moves in one sense along a rectilinear path.

5. Optical system according to any one of the preceding claims, **characterized in that** one and the same analogue encoding is carried out periodically by groups of n contiguous encoding cells on the encoder (5), the detection device (9) comprising, in the direction of displacement of the mobile spot, m detection cells assigned to each of the n encoding cells.

6. Optical system according to any one of the preceding claims, **characterized in that** it is used as angular sensor, the body in motion being rotary.

7. Optical system according to the preceding claim, **characterized in that** the diffractive optical encoder (5) consists of a disc fastened to a revolving shaft, the encoding cells being disposed on an annular track of the disc.

8. Optical system according to the preceding claim, **characterized in that** it comprises a second disc (10), more distant from the light source (1) and disposed at least partially in the path of the luminous signal on exit from the first disc (5) so that the light (14) not diffracted by the said first disc (5) encounters a track generating an analogue encoding on the same detection device, the two discs (5, 10) being linked by a shaft portion consisting of a torsion bar (11).

9. Optical system according to the preceding claim, **characterized in that** the analogue encoding is of the same periodicity and of the same form as the analogue encoding arising from the first disc (5).

10. Method of high resolution encoding of the displacement of a body in motion by means of an optical system according to any one of the preceding claims, **characterized by** the following steps:

    - reading of the digital optical code identifying the encoding cell on the body in motion and giving the absolute measurement of the position of the body in motion;

- simultaneous detection of the position of a luminous spot constituting the analogue signal generated by the detection cells and calculation of the incremental position of the body between two absolute measurement positions.

11. Method of high resolution encoding of the angular displacement of a body in rotation according to Claim 10, **characterized in that** the calculation of the incremental position is performed according to a barycentric scheme.

12. Method of high resolution encoding of the angular displacement of a body in rotation according to one of Claims 10 to 11, by means of an optical system according to Claims 8 and 9, **characterized by** the following steps:

    - reading of the digital optical code identifying the encoding cell on the body in motion and giving the absolute measurement of the angular position of the body in motion;
    - simultaneous detection of the position of the two luminous spots constituting the analogue signals generated respectively in the detection cells of the first disc (5) and in the track of the second disc (10) ;
    - measurement of the differential angle of the encoding discs (5, 10) by measurement of the distance (d) between the luminous spots resulting from the analogue encoding; and
    - calculation of the torque of the torsion shaft (11) to which the encoding discs (5, 10) are fastened, proportional to the measurement of the differential angle.

Figure 1

Figure 2

Figure 3

Figure 4

## RÉFÉRENCES CITÉES DANS LA DESCRIPTION

**Documents brevets cités dans la description**

- US 2002195551 A1
- WO 0006973 A
- US 6742275 B2
- EP 1862775 A1